# EUROPÄISCHE PATENTSCHRIFT

(11) **EP 2 333 578 B1**
(45) Veröffentlichungstag und Bekanntmachung des Hinweises auf die Patenterteilung: **25.11.2015**
(21) Anmeldenummer: 10193185.5
(22) Anmeldetag: 30.11.2010
(51) Int. Cl.: G01S 7/41, G01S 13/62, B60W 30/095, B60R 21/0134, G01S 13/93, G01S 13/87, G01S 13/58

(54) **Verfahren und Steuergerät zur Bestimmung einer Bewegungsrichtung eines sich auf ein Fahrzeug zu bewegenden Objektes**
Method and control device for determining a movement direction of an object moving towards a vehicle
Procédé et appareil de commande pour la détermination d'une direction de déplacement d'un objet se déplaçant vers un véhicule

(30) Priorität: 02.12.2009 DE 102009047390
(43) Veröffentlichungstag der Anmeldung: 15.06.2011
(73) Patentinhaber: Robert Bosch GmbH, 70442 Stuttgart (DE)
(72) Erfinder: Weeber, Kai, 71296, Heimsheim (DE); Koenning, Markus, 70469, Stuttgart (DE)

(56) Entgegenhaltungen:
- EP-A2- 2 023 156
- US-A- 5 949 366
- US-A1- 2005 060 117
- US-A1- 2006 091 654

## Beschreibung

### Stand der Technik

Die vorliegende Erfindung bezieht sich auf ein Verfahren zur Bestimmung einer Bewegungsrichtung eines sich auf ein Fahrzeug zu bewegenden Objektes gemäß Anspruch 1, ein Steuergerät gemäß Anspruch 9, ein Computerprogrammprodukt gemäß Anspruch 10 sowie ein Sensorsystem gemäß Anspruch 11.

Sensoren zur Fußgängererkennung, die im Bereich des Stoßfängers verbaut sind, sind bereits im Serieneinsatz und schon technisch sehr gut ausgereift. Des Weiteren sind periphere Sensoren zur Aufprallerkennung ebenfalls schon im Serieneinsatz. Zudem gibt es bereits Kombinationssensoren im Seitenbereich, wo beispielsweise ein Drucksensor mit einem Beschleunigungssensor in einem Gehäuse kombiniert ist. Ebenso ist die Doppelnutzung der Fußgängerschutzsensoren zur Aufprallerkennung und zur Unterstützung der Zentralsensorik bekannt. Zudem haben sich insbesondere Radarsensoren mittlerweile durch Fahrerassistenzfunktionen wie Abstandswarner und -regler (bspw. ACC = Adaptiv Cruise Control) oder Bremsfunktionen (beispielsweise AN B = Automatische Notbremsung) im Fahrzeug durchgesetzt. Auch im Bereich der passiven Sicherheit werden diese Sensoren mittlerweile genutzt um wichtige Informationen bereits vor dem Crash zu bekommen und entsprechend der Situation die Rückhaltemittel im Crash anzupassen.

Die DE 10 2006 036 934 A1 offenbart eine Vorrichtung, bei der eine Fahrzeugsensorik mit einer Fahrzeugbaugruppe zu einer Einheit verbunden ist, wobei die Fahrzeugsensorik und die Fahrzeugbaugruppe zu unterschiedlichen Fahrzeugsystemen gehören. Bei der Fahrzeugsensorik kann es sich um eine Unfallsensorik handeln. So kann eine Reduzierung des Montageaufwands bzw. der Montagelogistik erreicht werden.

Die EP 2 023 156 A2 offenbart eine Detektionsvorrichtung und -verfahren.

Die US 2006/091654 offenbart ein Sensorsystem mit einem Radarsensor und einem Sichtsensor.

Die US 5 949 366 A offenbart ein Verfahren und eine Vorrichtung zur Sensierung einer bevorstehenden oder möglichen Kollision.

Die US 2005/060117 A1 offenbart ein Verfahren und eine Vorrichtung zur Erkennung einer Distanz einer Sensorvorrichtung zu einem Objekt.

### Offenbarung der Erfindung

Vor diesem Hintergrund besteht die Aufgabe der vorliegenden Erfindung darin, eine Verbesserung der Abschätzungsmöglichkeit für eine Gefahr eines Aufpralls zu schaffen.

Diese Aufgabe wird durch die Gegenstände der unabhängigen Ansprüche gelöst.

Insbesondere wird mit der vorliegenden Erfindung ein Verfahren zum Aufprallschutz, ein Steuergerät, das dieses Verfahren verwendet, weiterhin ein entsprechendes Computerprogrammprodukt, sowie schließlich ein Sensorsystem gemäß den unabhängigen Patentansprüchen vorgestellt. Vorteilhafte Ausgestaltungen ergeben sich aus den jeweiligen Unteransprüchen und der nachfolgenden Beschreibung.

Die vorliegende Erfindung schafft ein Verfahren zur Bestimmung einer Bewegungsrichtung eines sich auf ein Fahrzeug zu bewegenden Objektes, wobei das Verfahren die folgenden Schritte aufweist:
- Empfangen eines ersten Sensorsignals, das eine von einer ersten Signalmessposition an einer in Fahrtrichtung gesehen linken Seite des Fahrzeugs oder einer Fahrzeugfront (beispielsweise mittels Radar) gemessene Geschwindigkeit des Objektes auf das Fahrzeug zu repräsentiert und das eine
- Information über eine Intensität eines von dem Objekt reflektierten Radarstrahls enthält;
- Erhalten eines zweiten Sensorsignals, das eine von einer zweiten Signalmessposition an einer in Fahrtrichtung gesehen rechten Seite des Fahrzeugs oder einer Fahrzeugfront (beispielsweise mittels Radar) gemessene Geschwindigkeit des Objektes auf das Fahrzeug zu repräsentiert und das eine Information über eine Intensität eines von dem Objekt reflektierten Radarstrahls enthält; und
- Verknüpfen des ersten Sensorsignals mit dem zweiten Sensorsignal und einer Information über einen Abstand zwischen der ersten und zweiten Signalmessposition, um eine Bewegungsrichtung eines sich auf das Fahrzeug zu bewegenden Objektes zu bestimmen
   dadurch gekennzeichnet, dass
   im Schritt des Verknüpfens ferner ein Abschätzen einer Ausdehnung des sich auf das Fahrzeug zu bewegenden Objektes unter Verwendung der Information über die Intensität und der Geschwindigkeit aus dem ersten Sensorsignal und/oder unter Verwendung der Information über die Intensität und der Geschwindigkeit aus dem zweiten Sensorsignal erfolgt.

Die vorliegende Erfindung schafft ferner ein Steuergerät, das ausgebildet ist, um die Schritte des erfindungsgemäßen Verfahrens durchzuführen bzw. umzusetzen. Auch durch diese Ausführungsvariante der Erfindung in Form eines Steuergeräts kann die der Erfindung zugrunde liegende Aufgabe schnell und effizient gelöst werden.

Unter einem Steuergerät kann vorliegend ein elektrisches Gerät verstanden werden, das Sensorsignale verarbeitet und in Abhängigkeit davon Steuersignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder mindestens teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung des Verfahrens nach einem der vorstehend beschriebenen Ausführungsformen verwendet wird, wenn das Programm auf einem Steuergerät oder einer Datenverarbeitungseinheit ausgeführt wird.

Auch schafft die vorliegende Erfindung ein Sensorsystem, das folgende Merkmale umfasst:
- einen ersten vorausschauenden Radarsensor, der an einer in Fahrtrichtung gesehen linken Seite des Fahrzeugs oder einer Fahrzeugfront verbaut ist und der ausgebildet ist, um ein erstes Sensorsignal zu liefern, das eine gemessene Geschwindigkeit des Objektes auf das Fahrzeug/den Sensor zu repräsentiert;
- einen zweiten vorausschauenden Radarsensor, der an einer in Fahrtrichtung gesehen rechten Seite des Fahrzeugs oder einer Fahrzeugfront verbaut ist, und der ausgebildet ist, um ein zweites Sensorsignal zu liefern, das eine gemessene Geschwindigkeit des Objektes auf das Fahrzeug/den Sensor zu repräsentiert; und
- eine Steuereinheit wie sie vorstehend beschrieben wurde.

Die vorliegende Erfindung basiert auf der Erkenntnis, dass durch zwei Signale, die jeweils eine von unterschiedlichen Positionen aufgenommene Geschwindigkeit eines auf das Fahrzeug zu kommenden Objektes repräsentieren ein genauer Bewegungsweg dieses Objekts auf das Fahrzeug zu möglich wird. Hierbei wird zur Bestimmung des Bewegungswegs neben den beiden Signalen noch eine Information über den Abstand der beiden Positionen voneinander verwendet, von denen aus die Geschwindigkeit des auf das Fahrzeug zu kommenden Objekts gemessen wird. Diese kann beispielsweise mit Hilfe gemessener Entfernungsgates und zwischendurch interpolierten Werten hinreichend genau genug bestimmt werden. Die Geschwindigkeits- und Entfernungsinformationen können dann durch ein Triangulationsverfahren derart miteinander verknüpft werden, dass der Bewegungsweg des Objektes auf das Fahrzeug zu exakt bestimmbar ist.

Die vorliegende Erfindung bietet den Vorteil, dass nun technisch einfache und somit kostengünstige Radarsensoren an unterschiedlichen Positionen (beispielsweise im Frontbereich des Fahrzeugs, aber auch genauso an einer Fahrzeugseite) verbaut werden können und die Information aus den beiden Sensoren derart in einer Recheneinheit miteinander verknüpft werden können, dass aus den beiden einfachen Sensoren nun ein intelligenter "vorausschauender Sensor" gebildet werden kann. Zusätzlich besteht die Möglichkeit, in das Gehäuse der beiden Radarsensoren noch jeweils einen Beschleunigungssensor einzubauen, so dass ein Kombinationssensor aus technisch sehr einfachen und daher sehr kostengünstig herzustellenden Sensoren gebildet werden kann. Hierdurch kann nicht nur die Funktionalität des intelligenten "vorrausschauenden Sensors" bereitgestellt werden, vielmehr kann auch eine Plausibilisierung bei einem Aufprall des Objektes auf das Fahrzeug sehr einfach durchgeführt werden, da nun durch die erfasste Bewegungsrichtung des Objekts auf das Fahrzeug zu eine gewisse Vorwarnung über einen zeitlich unmittelbar nachfolgenden Aufprall des Objektes auf das Fahrzeug möglich ist.

In einer besonderen Ausführungsform der Erfindung kann im Schritt des Empfangens das erste Sensorsignal empfangen werden, das eine Information über eine Intensität eines von dem Objekt reflektierten Radarstrahls enthält und/oder es kann im Schritt des Erhaltens das zweite Sensorsignal erhalten werden, das eine Information über eine Intensität eines von dem Objekt reflektierten Radarstrahls enthält und wobei im Schritt des Verknüpfens ferner ein Abschätzen einer Ausdehnung des sich auf das Fahrzeug zu bewegenden Objektes unter Verwendung der Information über die Intensität aus dem ersten Sensorsignal und/oder unter Verwendung der Information über die Intensität aus dem zweiten Sensorsignal erfolgen kann. Eine derartige Ausführungsform der vorliegenden Erfindung bietet den Vorteil, dass neben einer Bewegungsrichtung des Objektes auf das Fahrzeug zu nun noch eine Abschätzung der Größe bzw. Breite des Objektes möglich ist. Dabei kann das erste und/oder zweite Sensorsignal lediglich software-technisch weiter aufbereitet werden und aus der Amplitude des entsprechenden Sensorsignals/die entsprechenden Sensorsignale die zusätzlichen Informationen gewonnen werden. Diese Informationen über die Größe des Objektes ermöglichen dann eine Abschätzung, wie schwer ein Aufprall des Objektes das Fahrzeug beschädigen würde und welche Sicherheitsmittel für den Insassenschutz mit welcher Stärke aktiviert werden sollten.

In einer anderen Ausführungsform der Erfindung kann im Schritt des Empfangens das erste Sensorsignal empfangen werden, das eine Information über den zeitlichen Verlauf und der Sensorsignaländerung enthält und/oder wobei im Schritt des Erhaltens das zweite Sensorsignal werden kann, das eine Information über den zeitlichen Verlauf und der Sensorsignaländerung enthält und wobei im Schritt des Verknüpfens ferner ein Abschätzen einer Position (laterale Orientierung) des sich auf das Fahrzeug zu bewegenden Objektes unter Verwendung der Information aus dem zeitlichen Verlauf der Signaländerung und/oder unter Verwendung der Information aus dem zeitlichen Verlauf der Signaländerung erfolgen kann. Eine derartige Ausführungsform der vorliegenden Erfindung bietet den Vorteil, dass neben der bestimmten Bewegungsrichtung noch ein laterale Orientierung des Objektes von dem Fahrzeug ermittelt werden kann, so dass neben der Bestimmung der Bewegungsrichtung auch eine sehr präzise Positionserkennung des Objektes in Bezug zum Fahrzeug möglich wird. Dies verbessert eine Abschätzung des Aufprallzeitpunkts des Objektes auf das Fahrzeug und ermöglicht somit eine präzisere Ansteuerung der entsprechenden Sicherheitsmittel, die die Folgen des Aufpralls auf das Fahrzeug kompensieren oder zumindest abschwächen sollen.

Günstig ist es ferner, wenn im Schritt des Verknüpfens eine Position des Objektes in Bezug zum Fahrzeug auf der Basis einer Differenzgröße bestimmt wird, wobei zur Ermittlung der Differenzgröße eine Differenz zwischen einer durch das erste Sensorsignal repräsentierten Frequenz oder Geschwindigkeit und einer durch das zweite Sensorsignal repräsentierten Frequenz oder Geschwindigkeit gebildet wird. Eine derartige Ausführungsform der vorliegenden Erfindung bietet den Vorteil, dass durch technisch sehr einfach zu realisierende Algorithmenfunktionen bereits eine grobe Positionsbestimmung des Objektes in Bezug zum Fahrzeug möglich wird. Eine solche technisch sehr einfach zu realisieren der Funktion wird insbesondere dann zusätzlich vereinfacht, wenn speziell ein Vorzeichen der Differenzgröße ausgewertet wird. So kann beispielsweise im Schritt des Verknüpfens eine Position des Objektes mittig zum Fahrzeug erkannt werden, wenn die Differenzgröße innerhalb eines Toleranzbereiches um einen Wert von Null liegt. Auch kann in einer anderen Ausführungsform der Erfindung im Schritt des Verknüpfens eine Position des Objekts in die Fahrtrichtung gesehen auf der rechten Fahrzeugseite erkannt werden, wenn die Differenzgröße einen positiven Wert aufweist. Alternativ oder zusätzlich kann auch im Schritt des Verknüpfens eine Position des Objektes in die Fahrtrichtung gesehen linke Seite erkannt werden, wenn die Differenzgröße einen negativen Wert aufweist. Oder umgekehrt, je nach Subtraktionsformel. Ähnliche Erkenntnisse lassen sich unter Umständen auch über eine Division erreichen.

Gemäß einer weiteren Ausführungsform der Erfindung kann das Verfahren ferner einen Schritt des Empfangens eines dritten Sensorsignals aufweisen, das eine Beschleunigung zumindest einer Komponente des Fahrzeugs repräsentiert, die größer als ein Beschleunigungsschwellwert ist, wobei das Verfahren weiterhin einen Schritt des Aktivierens eines Fahrzeuginsassenschutzmittels umfasst, wenn zeitlich nach einer bestimmten Bewegungsrichtung des Objektes in Richtung des Fahrzeugs das dritte Sensorsignal empfangen wird. Eine derartige Ausführungsform der vorliegenden Erfindung bietet den Vorteil, dass beispielsweise mittels eines integrierten Sensors einerseits das erste Sensorsignal (beispielsweise als Radarsignal) erfasst werden kann, wogegen das dritte Sensorsignal eine Beschleunigung beim Aufprall des Objekt auf das Fahrzeug repräsentiert, das durch einen Beschleunigungssensor bestimmt wird, der zusammen mit dem entsprechenden Radarsensor in einem integrierten Sensor verbaut ist. Auf diese Weise können Herstellungskosten für das Fahrzeug gesenkt werden da lediglich ein einfacher und somit kostengünstiger integrierter Sensor an einer bzw. zwei Positionen im Fahrzeug verbaut werden braucht. Dennoch kann eine sehr gute Plausibilisierung eines Aufpralls eines Objektes auf das Fahrzeug erfolgen, da durch die Abschätzung der Bewegungsrichtung des Objektes auf das Fahrzeug eine kurz danach auftretende Beschleunigung durch den Einschlag als "Aufprall des Objektes auf das Fahrzeug" plausibilisiert werden kann. Das dritte Sensorsignal kann auch aus mehreren anderen beschleunigungsbasierten Sensorsignalen erzeugt werden.

Die Erfindung wird anhand der beigefügten Zeichnungen beispielhaft näher erläutert. Es zeigen:
- Fig. 1: ein Blockschaltbild eines ersten Ausführungsbeispiels der vorliegenden Erfindung, bei dem ein Systemaufbau mit zwei Sensoren und einem zentralen Steuergerät verwendet wird;
- Fig. 2: eine Darstellung der Verteilung der Differenzreflexionen als Radialgeschwindigkeit dargestellt für ein punktuelles Objekt;
- Fig. 3: eine Darstellung der Verteilung der Differenzreflexionen als Radialgeschwindigkeit dargestellt für ein ausgedehntes Objekt;
- Fig. 4: eine Darstellung des Verlaufs der Radialgeschwindigkeiten für ein punktuelles und ausgedehntes Objekt mit unterschiedlichem Versatz;
- Fig. 5: eine Darstellung des Verlaufs der Radialgeschwindigkeiten für ein punktuelles Objekt, was in einem Winkel auf das betrachtete Fahrzeug zukommt. Im Hintergrund sind als Hilfe die Verläufe von einem Objekt mit Versatz dargestellt; und
- Fig. 6: ein Ablaufdiagramm eines Ausführungsbeispiels der vorliegenden Erfindung als Verfahren.

Gleiche oder ähnliche Elemente können in den Figuren durch gleiche oder ähnliche Bezugszeichen versehen sein, wobei auf eine wiederholte Beschreibung verzichtet wird. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können. Weiterhin ist die Erfindung in der nachfolgenden Beschreibung unter Verwendung von unterschiedlichen Maßen und Dimensionen erläutert, wobei die Erfindung nicht auf diese Maße und Dimensionen eingeschränkt zu verstehen ist. Ferner können erfindungsgemäße Verfahrensschritte wiederholt sowie in einer anderen als in der beschriebenen Reihenfolge ausgeführt werden. Umfasst ein Ausführungsbeispiel eine "und/oder" Verknüpfung zwischen einem ersten Merkmal und einem zweites Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

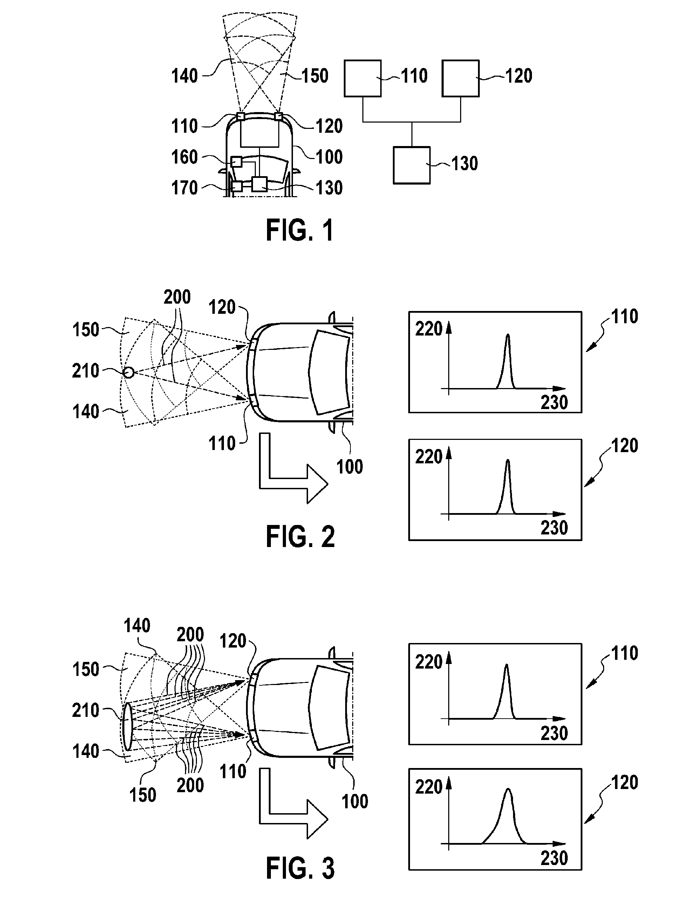

Fig. 1 zeigt ein Blockschaltbild eines ersten Ausführungsbeispiels der vorliegenden Erfindung, bei dem ein Systemaufbau mit zwei Sensoren und einem zentralen Steuergerät verwendet werden. Dabei ist in der linken Darstellung aus Fig. 1 ein Fahrzeug 100 wiedergegeben, bei dem im Bereich der linken Frontseite ein erster Sensor 110 und im Bereich der rechten Frontseite ein zweiter Sensor 120 angeordnet sind. Sowohl der erste Sensor 110 als auch der zweite Sensor 120 sind mit einer zentralen Auswerteeinheit 130 verbunden, die beispielsweise ein Airbag-Steuergerät ist. In der rechten Teildarstellung ist nochmals eine vergrößerte Wiedergabe der Zusammenschaltung des ersten Sensors 110, des zweiten Sensors 120 sowie der zentralen Auswerteeinheit 130 wiedergegeben. Wie aus der linken Teildarstellung der Figur 1 ersichtlich ist, überwacht der erste Sensor 110 einen ersten Erfassungsbereich 140, beispielsweise indem er einen Radarstrahl in diesen ersten Überwachungs- bzw. Erfassungsbereich 140 aussendet und eine Reflexion dieses Radarstrahls an einem Objekt in dem ersten Erfassungsbereich 140 empfängt. Dabei wird beispielsweise eine Auswertung der Dopplerfrequenzverschiebung zwischen dem ausgesendeten Radarstrahl und dem empfangenen Radarstrahl durchgeführt, so dass eine Geschwindigkeitskomponente des Objektes auf das Fahrzeug 100 / den Sensor 110 zu erfasst wird. Zugleich kann im ersten Sensor 110 noch ein Beschleunigungssensor enthalten sein, der ein Beschleunigungsverhalten von Komponenten im Bereich der linken Frontseite des Fahrzeugs 100 während des Crashs misst und ebenfalls ein entsprechendes Beschleunigungssignal an die zentrale Auswerteeinheit 130 weitergeleitet. Der zweite Sensor 120 ist beispielsweise identisch zum ersten Sensor 110 aufgebaut, so dass mit dem zweiten Sensor 120 ein zweiter Erfassungsbereich 150 überwacht wird. Da der zweite Sensor 120 auf der rechten Seite im Frontbereich des Fahrzeugs 100 verbaut ist, wird nun ein Objekt, das auf das Fahrzeug 100 zu kommt, mit hoher Wahrscheinlichkeit in einem Überlappungsbereich eintreten, der sowohl Teil des ersten Erfassungsbereichs 140 als auch Teil des zweiten Erfassungsbereichs 150 ist. In diesem Fall wird die Annäherung des Objektes an das Fahrzeug 100 sowohl von dem ersten Sensor 110 als auch von den zweiten Sensor 120 erfasst, jedoch aus unterschiedlichen Blickwinkeln. Eine detailliertere Beschreibung der Auswertung der Signale vom ersten Sensor 110 und vom zweiten Sensor 120 (beispielsweise in der zentralen Auswerteeinheit 130) wird nachfolgend noch näher erläutert.

Wird nun in der zentralen Auswerteeinheit 130 eine Bewegungsrichtung eines Objektes auf das Fahrzeug 100 zu erkannt, können bereits vor einem Aufprall des Objektes auf das Fahrzeug 100 bestimmte Insassenschutzmittel aktiviert oder in einen erhöhten Alarmzustand versetzt werden. Beispielsweise kann eine Auslöseschwelle für einen Insassenairbag 160 herunter gesetzt werden oder die Information über das ankommende Objekt als Plausibilisierungssignal für eine Auslösung dieses Insassenairbag 160 verwendet werden. Alternativ oder zusätzlich kann beispielsweise ein Gurtstraffer 170 aktiviert werden, um vor einem Aufprall des Objekts auf das Fahrzeug einen Fahrzeuginsassen in einer für die Schutzwirkung eines Airbags optimalen Position zu halten oder zu bringen.

Sind nun im ersten Sensor 110 und/oder dem zweiten Sensor 120 ebenfalls Beschleunigungssensoren verbaut, können Signale dieser Beschleunigungssensoren bei einem Aufprall des Objekt auf das Fahrzeug 100 in der zentralen Auswerteeinheit 130 verwendet werden, um zusammen mit dem vorab gelieferten Signalen der Radar(teil)sensoren des ersten Sensors 110 oder des zweiten Sensors 120 sowohl eine Auslösung als auch eine Plausibilisierung der Auslösung eines Insassenschutzmittels im Fahrzeug zu bewirken. Dadurch, dass im ersten Sensor 110 und den zweiten Sensor 120 dann Sensoren für unterschiedliche physikalische Größen (beispielsweise in einem gemeinsamen Gehäuse) verbaut sind kann eine Montage dieser Sensoren für die unterschiedlichen physikalischen Größen sehr kostengünstig und dennoch funktional effizient erfolgen. Weiterhin brauchen für eine Grundfunktionalität der vorliegenden Erfindung auch keine teuren Radarsensoren verwendet werden; vielmehr reichen einfache und daher kostengünstige Sensoren aus, die bereits eine Messung der Geschwindigkeit des Objekts auf das Fahrzeug zu ermöglichen.

Ein Billig-Radarsensor alleine, also ein Sensor, der eine kurze Reichweite hat (meist unter 5 m) und weder mehrere Objekte im Erfassungsbereich von einander direkt unterscheiden kann, noch die exakte Position bestimmen kann (allerhöchstens Entfernungsbereiche festgelegt sind), kann die geforderten Informationen zur Bestimmung der Bewegungsrichtung des Objektes in der Regel alleine nicht direkt liefern. Diese notwendigen Informationen sollen nun, ohne dass der Sensor wieder teurer wird, in der Nachverarbeitung softwareseitig erzeugt werden.

Ein wichtiger Teil der Erfindung ist somit darin zu sehen, eine Realisierung eines billigen (beispielsweise Radar-) Sensors zu ermöglichen, der die notwendigen Informationen, wie Objektausdehnung, Orientierung etc. aus den Radarreflexionen softwareseitig herleitet. Gerade in der passiven Sicherheit bietet sich ein solcher Sensor an, da er zum einen sehr günstig, zum anderen die geringe Reichweite vollkommen ausreichend ist.

Wie bereits vorstehend mit Bezug auf die Fig. 1 beschrieben, basiert der hier vorgeschlagene Ansatz auf einer Verschaltung von mindestens zwei solchen einfachen und somit kostengünstigen Sensoren, die an unterschiedlichen Positionen im Fahrzeug angeordnet sind, wobei insbesondere zwei Billigradar-Sensoren und ein zentrales Steuergerät verwendet werden, welches die Einzelinformationen verarbeiten und zusammenfügen kann. Als "Steuergerät" bietet es sich an, eine Integration der Auswerteeinheit für die beiden Sensoren in das Airbag-Steuergerät durchzuführen, da hier ausreichend numerische Leistung kostengünstig bereitgestellt werden kann.

Die Sensoren 110 und 120 können jeweils die exakte Geschwindigkeit (hier Radialgeschwindigkeit 200, die aus der Dopplerverschiebung des reflektierten Radarstrahls im Vergleich zum ausgesandten Radarstrahl bestimmt wird) des kollidierenden Objektes 210 messen, wie dies in der rechten Darstellung aus Fig. 2 für die Erkennung eines punktuellen Objektes näher verdeutlicht ist. In den linken Darstellungen aus Fig. 2 sind Kennlinien der Reflexionsintensität 220 über die Radialgeschwindigkeit 230 wiedergegeben, wobei die obere rechten Darstellung Messwerte des ersten Sensors 110 repräsentiert und die rechte untere Darstellung der Fig. 2 die Messwerte des zweiten Sensors 120 repräsentiert. Kommt ein kleines punktuelles Objekt 210 mittig auf das Fahrzeug 100 zu werden die beiden Sensoren ähnliche Signale empfangen, wie dies aus den rechten Darstellungen der Fig. 2 wiedergegeben ist. Über die Reflexionsintensität 220 kann neben der Geschwindigkeit 230 des Objektes (beispielsweise als Mittelwert oder mathematisches Gewicht) auch eine Ausdehnung des Objektes 210 geschätzt werden. Hierbei bedient man sich der Art der Verteilung der Reflexionsintensitäten 230 in der Differenzfrequenz. Dazu kann eine Differenzgröße bestimmt werden, die aus den ermittelten Radialfrequenzen des ersten und zweiten Sensors 110 und 120 bestimmt wird. In Fig. 3 ist eine zu Fig. 2 analoge Darstellung wiedergegeben, in der nun die Radialgeschwindigkeit eines ausgedehnten Objektes 210 auf das Fahrzeug zu bestimmt wird, wobei aus der unteren rechten Darstellung der Fig. 3 eine breitere Streuung der am Objekt 210 reflektierten Radarstrahlen ersichtlich ist, aus der folglich auch eine breitere Streuung der unterschiedliche Radialgeschwindigkeiten 230 bestimmt werden kann. Dies führt dazu, dass ein Teil des Objektes 210 als sich scheinbar schneller auf die jeweiligen Sensoren 110 und 120 des Fahrzeugs zu bewegend interpretiert wird, als ein anderer Teil des Objektes 210. Aus einer solchen Streuung des reflektierten Radarstrahls kann dann eindeutig die Größe oder geometrische Ausdehnung des Objektes 210 bestimmt werden, wenn die geometrischen Rahmenbedingungen bekannt sind, insbesondere bei Verwendung des Triangulationsverfahrens.

Durch die Verwendung von zwei Sensoren (und beispielsweise einer groben Klassifikation in Entfernungsgates (Distance-Gates), durch die ein grober Abstand des Objektes 210 vom Fahrzeug 100 bestimmt wird) kann die Position des Objektes longitudinal (bei Verwendung des zeitlichen Verlaufs) und/oder lateral bestimmt und die Aufprallgeschwindigkeit ermittelt werden. Longitudinal wird zwar direkt vom Sensor 110 nur ein Entfernungsbereich angegeben oder bestimmt, allerdings durch eine Triangulation mit der Information des zweiten Sensors 120 (und evtl. dem Abstand zwischen dem ersten und zweiten Sensor), kann die Entfernung des Objektes 210 ab Eintritt in den Entfernungsbereich 140 bzw. 150 mit Hilfe der gemessenen und berechneten Geschwindigkeitsinformationen (Radialgeschwindigkeiten und Aufprallgeschwindigkeit) gut geschätzt (d.h. bestimmt bzw. interpoliert) werden, was aus der Fig. 2 ersichtlich wird. Lateral kann mit Hilfe der Streuung der Verteilung der Differenzfrequenzen die relative Position des Objektes zum Ego-Fahrzeug 100 (d.h. zum betrachteten Fahrzeug) abgeschätzt werden, wie es in der Fig. 3 näher dargestellt ist. Es ergeben sich dann folgende Situationen:

Ist Differenz des Signals vom linken Sensor 110 zum rechten Sensor 120 (d.h. insbesondere das Signal des ersten Sensors 110 - das Signal des zweiten Sensors 120) nahezu konstant 0, lässt dies darauf schließen, dass es sich bei dem Objekt 210 um ein punktuelles Objekt handelt, das mittig zum Fahrzeug 100 ausgerichtet ist und auf das Fahrzeug 100 zukommt. Alternativ kann es sich bei dem Objekt 210 um ein ausgedehntes Objekt handeln, das symmetrisch um die Fahrzeugmitte ausgerichtet ist und auf das Fahrzeug 100 zukommt.

Ist die Differenzfläche aus dem Signal vom linken Sensor 110 und dem Signal des rechten Sensors 120 (d.h. insbesondere ein Signal des ersten Sensors 110-ein Signal des zweiten Sensors 120) vollständig positiv, dann wird es sich um ein ausgedehntes Objekt 210 handeln, das sich rechts vom Fahrzeug oder zumindest auf der rechten Seite des Fahrzeugs 100 befindet.

Ist die Differenzfläche aus dem Signal des linken Sensors 110 und dem Signal des rechten Sensors 120 (d.h. insbesondere das Signal des ersten Sensors 110 - das Signal des zweiten Sensors 120) vollständig negativ, ist von einem ausgedehnten Objekt 210 auszugehen, das sich links vom Fahrzeug oder auf der linken Seite des Fahrzeugs 100 befindet.

Ist die Differenzfläche aus dem Signal des linken Sensors 110 und dem Signal des rechten Sensors 120 (d.h. insbesondere ein Signal des ersten Sensors 110-ein Signal des zweiten Sensors 120) für einige Zeitintervalle positiv und für einige negativ, die Gesamtfläche kleiner als 0, dann handelt es sich um einen Versatz eines punktuellen Objekts 210.

Durch die dynamische Veränderung dieser erzeugten (Signal-) Werte, kann dann beispielsweise anschließend noch der Versatz des Objektes in Bezug zum Fahrzeug genauer bestimmt werden und ebenfalls die Orientierung/Winkel zum Ego-Fahrzeug hergeleitet werden.

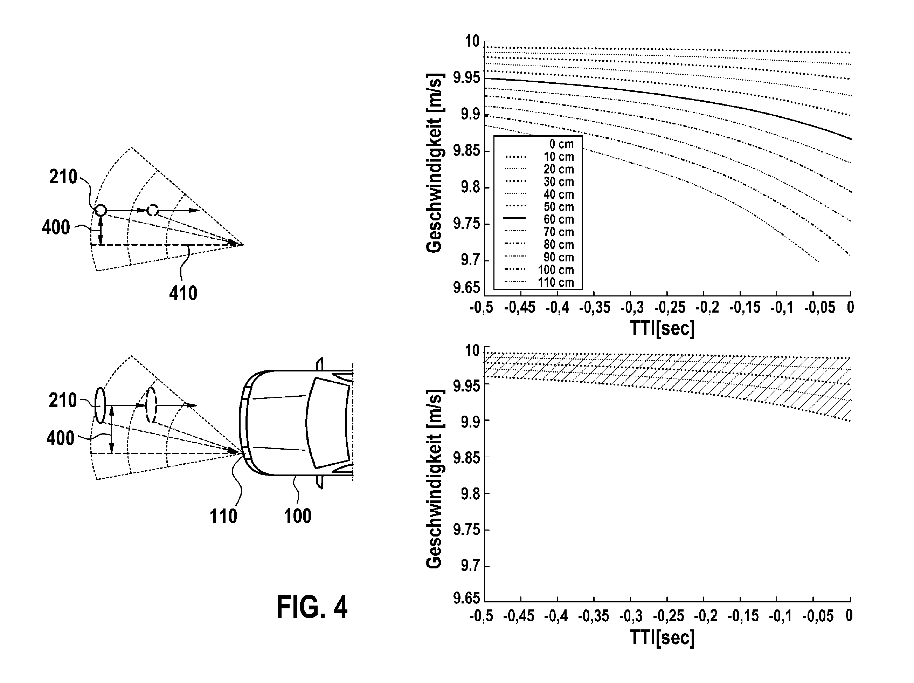

Der Versatz ergibt sich dabei durch die Geschwindigkeitsänderung. Der Radarsensor berechnet ja die Radialgeschwindigkeit des Objektes 210. Durch Triangulation dieser Information mit einer analogen Information vom zweiten Sensor 120, kann dann die Aufprallgeschwindigkeit gemessen werden. Durch die jeweilige Änderung der Radialgeschwindigkeit kann dann der laterale Versatz 400 des Objektes mittels Trigonometrie (beispielsweise über Sinus/Cosinus-Berechnungen) oder durch vorher bestimmte Vergleichsverläufe hergeleitet werden. Eine solche Bestimmung des Versatzes ist in der Fig. 4 dargestellt, wobei in den oberen beiden Darstellungen ein lateraler Versatz eines punktförmigen Objektes 210 zu einer Blickrichtung 410 des Sensors in Fahrtrichtung (linke obere Darstellung der Fig.4) und ein zugehöriger Geschwindigkeitsverlauf der Radialgeschwindigkeit in Abhängigkeit des Versatzes (rechte obere Darstellung der Fig. 4) bei einer Relativgeschwindigkeit von 10 m/s zwischen Fahrzeug 100 und Objekt 210, einer Distanz von 5 m zwischen Fahrzeug 100 und Objekt 210 und einem Versatz 400 von 0 cm (gestrichelte Linie) in 10 cm-Schritten bis zu 110 cm (gepunktetgestrichelte Linie) dargestellt ist. In den unteren Darstellungen der Fig. 4 ein lateraler Versatz für ein ausgedehnteres Objekt 210 wiedergegeben. Wie in der Fig. 4 unten links dargestellt ist, bewegt sich das ausgedehnte Objekt 210 ebenfalls mit einem Versatz 400 auf das Fahrzeug 100 zu. In der Darstellung unten rechts in der Fig. 4 ist ein zugehöriger Geschwindigkeitsverlauf dargestellt, bei einer Relativgeschwindigkeit von 10 m/s zwischen Fahrzeug 100 und Objekt 210 bei einer Distanz von 5 m zwischen Fahrzeug 100 und Objekt 210 sowie einem Versatz von 30 cm dargestellt ist, wobei das Objekt 210 eine Ausdehnung von 40 cm (aus der Sichtweise eines Sensors 110) aufweist. Je nach Reflexionszentrum und zeitlichen Sprüngen des Reflexionszentrums, wird der reale Geschwindigkeitsverlauf auf jeden Fall innerhalb des grauen Bereichs liegen. Die Grenzlinien entsprechen jeweils dem Signal eines punktuellen Objekts mit Versatz von 10 cm bzw. von 50 cm.

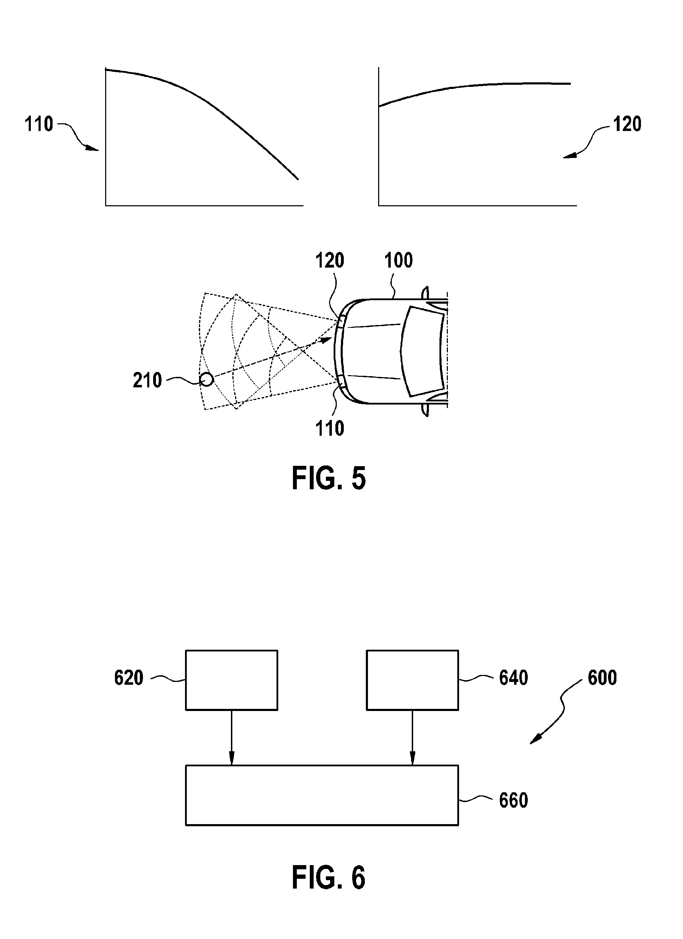

Der Winkel, mit dem sich das Objekt 210 auf das Fahrzeug 100 zu bewegt, kann dann ähnlich bestimmt werden, nur dass hier wesentlich größere Änderungen auftreten. In Fig. 5 ist die Bestimmung eines Auftreffwinkels von einem Objekt 210 auf das Fahrzeug 100 schematisch näher dargestellt. In den oberen beiden Darstellungen der Fig. 5 ist dabei der Geschwindigkeitsverlauf für das ankommende Objekt 210 dargestellt, wie sie vom ersten Sensor 110 (linkes oberes Diagramm aus Fig. 5) und vom zweiten Sensor 120 (rechtes oberes Diagramm aus Fig. 5) gemessen werden. Dabei ist in den beiden genannten Diagrammen der Fig. 5 die gemessene Geschwindigkeit über eine Messzeit aufgetragen. Aus den beiden Diagrammen der Fig. 5 kann eindeutig entnommen werden, dass das Objekt 210 von einer linken Seite des Fahrzeugs 100 kommt und sich auf eine rechte Seite des Fahrzeugs 100 zu bewegt. Erkennbar wird dies aus der kombinierten Betrachtung der beiden Diagramme, da aus dem Diagramm für ein Sensorsignal des linken Sensors 110 (linkes Diagramm) ein Abfall der Geschwindigkeit bei zunehmender Zeit (d.h. bei abnehmender Zeit vor dem Aufprall des Objektes 210 auf das Fahrzeugs 100) zu entnehmen ist. Dies bedeutet, dass sich bei zunehmender Zeit die Geschwindigkeitskomponente, die vom ersten Sensor 110 in Richtung des Fahrzeugs 100 erfasst werden kann nicht mehr wesentlich ändert, das Objekt 210 bereits sehr nahe am zweiten Sensor 120 ist und sich fast tangential zum Sensor 110 bewegt. Demgegenüber erhöht sich die vom zweiten Sensor 120 gemessene Geschwindigkeitskomponente in Richtung des Fahrzeugs 100 mit zunehmender Zeit etwas, da das Objekt sich nun näher am zweiten Sensor 120 befindet und somit eine größere absolute Änderung eines Messwertes erfolgt, wenn das Objekt 210 eine vorgegebene Wegstrecke in seiner Bewegungsrichtung auf das Fahrzeug zu weiter zurückgelegt hat.

Schließlich ist anzumerken, dass der vorstehend genannte Ansatz zur Bestimmung einer Bewegungsrichtung eines auf das Fahrzeug zu kommenden Objektes unter Verwendung eines Radarsensors beschrieben wurde. Dieser Radarsensor kann aber auch durch einen anderen vorausschauenden Sensor ersetzt werden, wie beispielsweise einen Ultraschallsensor. Die Erfassung der Geschwindigkeit des ankommenden Objektes 210 kann bei der Verwendung eines Ultraschallsensors analog erfolgen; es kann beispielsweise ebenfalls eine Dopplerfrequenzverschiebung des Ultraschallsignals ausgewertet werden, um die Geschwindigkeit des ankommenden Objektes in Bezug zur Fahrzeuggeschwindigkeit erfassen zu können.

Die vorliegende Erfindung schafft auch ein Verfahren zum Aufprallschutz bei einem Zusammenprall eines Fahrzeugs mit einem Objekt unter Verwendung von Daten mindestens einer integrierten Sensoreinheit, die mindestens einen vorausschauenden Sensor, insbesondere einen Radarsensor, und mindestens einen Beschleunigungssensor aufweist, wobei das Verfahren folgende Schritte aufweist: Empfangen von Vorausdaten bezüglich des Objekts über eine Vorausdatenschnittstelle von dem vorausschauenden Sensor, wobei die Vorausdaten mindestens eine Geschwindigkeit und/oder eine Entfernung des Objektes bezüglich des Fahrzeugs vor dem Zusammenprall repräsentieren; Erhalten von Beschleunigungsdaten über eine Beschleunigungsdatenschnittstelle, wobei die Beschleunigungsdaten mindestens eine Beschleunigung des Fahrzeugs nach dem Zusammenprall mit dem Objekt repräsentieren; Kombinieren der Vorausdaten mit den Beschleunigungsdaten zur Bildung von Kombinationsdaten, wobei die Kombinationsdaten insbesondere eine Kollisionsgeschwindigkeit, eine Bewegungstrajektorie und/oder eine Entfernung des Objektes in Bezug zum Fahrzeug repräsentieren; und Verwenden der Kombinationsdaten in mindestens einer Vorrichtung zum Aufprallschutz.

Bei dem Aufprallschutz kann es sich um einen Schutz vor den Folgen des Zusammenpralls zwischen dem Fahrzeug und dem Objekt handeln, wobei der Schutz sich auf einen oder mehrere Insassen des Fahrzeugs und/oder des Objekts erstrecken kann. Bei dem Objekt kann es sich z.B. um einen Fußgänger oder Radfahrer handeln. Bei der integrierten Sensoreinheit kann es sich um eine Kombination aus zwei oder mehreren Sensoren handeln. Die Kombination kann einen Sensor umfassen, der Informationen liefert, die einen gewissen Zeitraum vor dem Zusammenprall liefert. Dies kann z.B. ein Radarsensor sein. Anstelle des Radarsensors kann auch ein anderer Sensortyp eingesetzt werden, der ausgebildet ist, um vorausschauende Daten zu liefern. Daneben kann die Kombination einen Sensor umfassen, der auf den Zusammenprall bezogene Informationen, z.B. über die Aufprallschwere, liefert. Dies kann z.B. ein Beschleunigungssensor sein. Ebenso kann anstelle des Beschleunigungssensors ein anderer Sensor, mit dem eine Aufprallschwere erfasst werden kann, z.B. ein Drucksensor, zum Einsatz kommen. Auch Kombinationen z.B. aus mehreren Radarsensoren und/oder Beschleunigungssensoren sind möglich. Die Sensoreinheit kann auch mehrere Kombinationen von Sensoren umfassen, die örtlich voneinander entfernt, z.B. in einer rechten oder linken Seite eines Stoßfängers des Fahrzeugs, verbaut sein können. Bei den Daten kann es sich zum einen um die Vorausdaten des vorausschauenden Sensors und zum anderen um die Beschleunigungsdaten des Beschleunigungssensors handeln, die über die entsprechenden Schnittstellen empfangen werden, wobei jeder Sensor mit einer eigenen Schnittstelle ausgestattet ist. Folglich können die Kombinationsdaten Informationen umfassen, die sowohl eine Situation vor dem Aufprall beschreiben als auch die Aufprallsituation selbst wiedergeben.

Bei den Daten kann es sich um Informationen handeln, die aus den Signalen des Radarsensors und des Beschleunigungssensors zusammengesetzt sind und an verschiedene Insassenschutzsysteme vor oder mit dem Zusammenprall ausgegeben werden können, um den Aufprallschutz zu gewährleisten.

Ein weiterer Aspekt der Erfindung ist somit eine Realisierung eines kombinierten vorausschauenden Unfallsensors (PreCrash-Sensors), der neben den Beschleunigungsdaten im Fall eines Aufpralls bereits unmittelbar vor dem Aufprall Informationen über Kollisionsgeschwindigkeit, Trajektorie und Entfernung schickt. Der vorausschauende Unfallsensor kann als eine Kombination aus einem Beschleunigungssensor mit einem Ein-Chip-Radar realisiert werden. Dieser kann dann (beispielsweise beidseitig) im Stoßfänger verbaut werden.

Ferner schafft die vorliegende Erfindung ein Verfahren 600 zur Bestimmung einer Bewegungsrichtung eines sich auf ein Fahrzeug zu bewegenden Objektes, wie es als Ablaufdiagramm in Fig. 6 dargestellt ist. Das Verfahren umfasst eines ersten Schritt des Empfangens 620 eines ersten Sensorsignale, das eine von einer ersten Signalmessposition an einer in Fahrtrichtung gesehen linken Seite des Fahrzeugs gemessene Geschwindigkeit des Objektes auf das Fahrzeug zu repräsentiert. Weiterhin umfasst das Verfahren 600 einen Schritt des Erhaltens 640 eines zweiten Sensorsignals, das eine von einer zweiten Signalmessposition an in Fahrtrichtung gesehen rechten Seite des Fahrzeugs gemessene Geschwindigkeit des Objektes auf das Fahrzeug zu repräsentiert. Auch weist das Verfahren 600 eine, weiteren Schritt des Verknüpfens 660 des ersten Sensorsignals mit dem zweiten Sensorsignal und einer Information über einen Abstand zwischen der ersten und zweiten Signalmessposition auf, um eine Bewegungsrichtung eines sich auf das Fahrzeug zu bewegenden Objektes zu bestimmen.

## Patentansprüche

1. Verfahren (600) zur Bestimmung einer Bewegungsrichtung eines sich auf ein Fahrzeug (100) zu bewegenden Objektes (210), wobei das Verfahren (600) die folgenden Schritte aufweist:
Empfangen (620) eines ersten Sensorsignals, das eine von einer ersten Signalmessposition (110) an einer in Fahrtrichtung gesehen linken Seite des Fahrzeugs (100) oder einer Fahrzeugfront gemessene Geschwindigkeit des Objektes (210) auf das Fahrzeug zu repräsentiert und das eine Information über eine Intensität eines von dem Objekt reflektierten Radarstrahls enthält;
Erhalten (640) eines zweiten Sensorsignals, das eine von einer zweiten Signalmessposition (120) an einer in Fahrtrichtung gesehen rechten Seite des Fahrzeugs oder einer Fahrzeugfront gemessene Geschwindigkeit des Objektes auf das Fahrzeug zu repräsentiert und das eine Information über eine Intensität eines von dem Objekt reflektierten Radarstrahls enthält; und
Verknüpfen (660) des ersten Sensorsignals mit dem zweiten Sensorsignal und einer Information über einen Abstand zwischen der ersten und zweiten Signalmessposition, um eine Bewegungsrichtung eines sich auf das Fahrzeug zu bewegenden Objektes zu bestimmen
**dadurch gekennzeichnet, dass**
im Schritt des Verknüpfens (660) ferner ein Abschätzen einer Ausdehnung des sich auf das Fahrzeug zu bewegenden Objektes unter Verwendung der Information über die Intensität und der Geschwindigkeit aus dem ersten Sensorsignal und/oder unter Verwendung der Information über die Intensität und der Geschwindigkeit aus dem zweiten Sensorsignal erfolgt.

2. Verfahren (600) gemäß Anspruch 1, **dadurch gekennzeichnet, dass** im Schritt des Verknüpfens (660) die Ausdehnung des sich auf das Fahrzeug zu bewegenden Objektes unter Verwendung einer Kennlinie einer Reflexionsintensität (220) über eine Radialgeschwindigkeit (230) unter Verwendung von Messerten eines ersten Sensors (110) und unter Verwendung einer Kennlinie einer Reflexionsintensität (220) über eine Radialgeschwindigkeit (230) unter Verwendung von Messerten eines zweiten Sensors (120) abgeschätzt wird.

3. Verfahren (600) gemäß einem der vorangegangenen Ansprüche, **dadurch gekennzeichnet, dass** im Schritt des Empfangens (620) das erste Sensorsignal empfangen wird, das eine Information über den zeitlichen Verlauf und eine Sensorsignaländerung und/oder wobei im Schritt des Erhaltens (640) das zweite Sensorsignal erhalten wird, das eine Information über den zeitlichen Verlauf und eine Sensorsignaländerung enthält und wobei im Schritt des Verknüpfens ferner ein Abschätzen einer Position des sich auf das Fahrzeug zu bewegenden Objektes unter Verwendung der Information aus dem zeitlichen Verlauf und der Signaländerung aus dem ersten Sensorsignal und/oder unter Verwendung der Information aus dem zeitlichen Verlauf und der Signaländerung aus dem zweiten Sensorsignal erfolgt.

4. Verfahren (600) gemäß einem der vorangegangenen Ansprüche, **dadurch gekennzeichnet, dass** im Schritt des Verknüpfens (660) eine Position des Objektes in Bezug zum Fahrzeug auf der Basis einer Differenzgröße bestimmt wird, wobei zur Ermittlung der Differenzgröße eine Differenz zwischen einer durch das erste Sensorsignal repräsentierten Frequenz oder Geschwindigkeit und einer durch das zweite Sensorsignal repräsentierten Frequenz oder Geschwindigkeit gebildet wird.

5. Verfahren (600) gemäß Anspruch 4, **dadurch gekennzeichnet, dass** im Schritt des Verknüpfens (660) eine Position des Objektes mittig zum Fahrzeug erkannt wird, wenn die Differenzgröße innerhalb eines Toleranzbereiches um einen Wert von Null liegt.

6. Verfahren (600) gemäß einem der Ansprüche 4 oder 5, **dadurch gekennzeichnet, dass** im Schritt des Verknüpfens (660) eine Position des Objekts in die Fahrtrichtung gesehen auf der rechten Fahrzeugseite erkannt wird, wenn die Differenzgröße einen positiven Wert aufweist.

7. Verfahren (600) gemäß einem der Ansprüche 4 bis 6, **dadurch gekennzeichnet, dass** im Schritt des Verknüpfens (660) eine Position des Objektes in die Fahrtrichtung gesehen linke Seite erkannt wird, wenn die Differenzgröße einen negativen Wert aufweist.

8. Verfahren (600) gemäß einem der vorangegangenen Ansprüche, **dadurch gekennzeichnet, dass** das Verfahren (600) ferner einen Schritt des Empfangens eines dritten Sensorsignals aufweist, das eine Beschleunigung zumindest einer Komponente des Fahrzeugs repräsentiert, die größer als ein Beschleunigungsschwellwert ist, wobei das Verfahren (600) weiterhin einen Schritt des Aktivierens eines Fahrzeuginsassenschutzmittels (160, 170) umfasst, wenn zeitlich nach einer bestimmten Bewegungsrichtung des Objektes in Richtung des Fahrzeugs das dritte Sensorsignal empfangen wird.

9. Steuergerät (130), das ausgebildet ist, um die Schritte eines Verfahrens (600) gemäß einem der Ansprüche 1 bis 8 durchzuführen.

10. Computerprogrammprodukt mit Programmcode, der auf einem maschinenlesbaren Träger gespeichert ist, zur Durchführung des Verfahrens (600) nach einem der Ansprüche 1 bis 8, wenn das Programm auf einem Steuergerät (130) oder einer Datenverarbeitungsanlage ausgeführt wird.

11. Sensorsystem (110, 120, 130), das folgende Merkmale umfasst:
einen ersten vorausschauenden Radarsensor (110), der an einer in Fahrtrichtung gesehen linken Seite des Fahrzeugs (100) verbaut ist und der ausgebildet ist, um ein erstes Sensorsignal zu liefern, das eine gemessene Geschwindigkeit eines Objektes (210) auf das Fahrzeug zu repräsentiert;
einen zweiten vorausschauenden Radarsensor (120), der an einer in Fahrtrichtung gesehen rechten Seite des Fahrzeugs (100) verbaut ist, und
der ausgebildet ist, um ein zweites Sensorsignal zu liefern, das eine Geschwindigkeit des Objektes auf das Fahrzeug zu repräsentiert; und eine Steuereinheit (130) gemäß Anspruch 9.

## Claims

1. Method (600) for determining a direction of movement of an object (210) moving towards a vehicle (100), wherein the method (600) has the following steps:
reception (620) of a first sensor signal that represents a speed of the object (210) towards the vehicle as measured from a first signal measurement position (110) on the left-hand side - as seen in the direction of travel - of the vehicle (100) or a vehicle front and that contains a piece of information about an intensity of a radar beam reflected by the object;
obtainment (640) of a second sensor signal that represents a speed of the object towards the vehicle as measured from a second signal measurement position (120) on the right-hand side - as seen in the direction of travel - of the vehicle or a vehicle front and that contains a piece of information about an intensity of a radar beam reflected by the object; and
combination (660) of the first sensor signal with the second sensor signal and a piece of information about an interval between the first and second signal measurement positions in order to determine a direction of movement of an object moving towards the vehicle, **characterized in that**
the step of combination (660) additionally involves estimation of an extent of the object moving towards the vehicle using the information about the intensity and the speed from the first sensor signal and/or using the information about the intensity and the speed from the second sensor signal.

2. Method (600) according to Claim 1, **characterized in that** the step of combination (660) involves the extent of the object moving towards the vehicle being estimated using a characteristic curve for a reflection intensity (220) over a radial speed (230) using measured values from a first sensor (110) and using a characteristic curve for a reflection intensity (220) over a radial speed (230) using measured values from a second sensor (120).

3. Method (600) according to either of the preceding claims, **characterized in that** the step of reception (620) involves the first sensor signal being received, which contains a piece of information about the time characteristic and a sensor signal change, and/or wherein the step of obtainment (640) involves the second sensor signal being obtained, which contains a piece of information about the time characteristic and a sensor signal change, and wherein the step of combination additionally involves estimation of a position of the object moving towards the vehicle using the information from the time characteristic and the signal change from the first sensor signal and/or using the information from the time characteristic and the signal change from the second sensor signal.

4. Method (600) according to one of the preceding claims, **characterized in that** the step of combination (660) involves a position of the object in relation to the vehicle being determined on the basis of a difference variable, the difference variable being ascertained by forming a difference between a frequency or speed represented by the first sensor signal and a frequency or speed represented by the second sensor signal.

5. Method (600) according to Claim 4, **characterized in that** the step of combination (660) involves a position of the object being identified centrally in relation to the vehicle when the difference variable is within a tolerance range around a value of zero.

6. Method (600) according to either of Claims 4 and 5, **characterized in that** the step of combination (660) involves a position of the object being identified on the right-hand vehicle side as seen in the direction of travel when the difference variable has a positive value.

7. Method (600) according to one of Claims 4 to 6, **characterized in that** the step of combination (660) involves a position of the object being identified on the left-hand side as seen in the direction of travel when the difference variable has a negative value.

8. Method (600) according to one of the preceding claims, **characterized in that** the method (600) additionally has a step of reception of a third sensor signal that represents an acceleration by at least one component of the vehicle that is greater than an acceleration threshold value, the method (600) additionally comprising a step of activation of a vehicle occupant protection means (160, 170) when the third sensor signal is received at a time after a particular direction of movement of the object in the direction of the vehicle.

9. Controller (130) that is designed to perform the steps of a method (600) according to one of Claims 1 to 8.

10. Computer program product having program code that is stored on a machine-readable storage medium for the purpose of performing the method (600) according to one of Claims 1 to 8 when the program is executed on a controller (130) or a data processing installation.

11. Sensor system (110, 120, 130) that comprises the following features: a first predictive radar sensor (110) that is installed on a left-hand side of the vehicle (100) as seen in the direction of travel and that is designed to deliver a first sensor signal that represents a measured speed of an object (210) towards the vehicle;
a second predictive radar sensor (120) that is installed on a right-hand side of the vehicle (100) as seen in the direction of travel and that is designed to deliver a second sensor signal that represents a speed of the object towards the vehicle; and
a control unit (130) according to Claim 9.

## Revendications

1. Procédé (600) de détermination de la direction de déplacement d'un objet (210) qui doit être déplacé sur un véhicule (100), le procédé (600) comportant les étapes suivantes :
réception (620) d'un premier signal de capteur qui représente une vitesse de l'objet (210) sur le véhicule depuis une première position (110) de mesure de signal sur le côté du véhicule (100) situé à gauche dans la direction de déplacement ou mesurée à l'avant du véhicule, et qui contient une information sur l'intensité d'un faisceau radar réfléchi par l'objet,
obtention (640) d'un deuxième signal de capteur qui représente la vitesse de l'objet sur le véhicule depuis une deuxième position (120) de mesure de signal sur le côté du véhicule situé à droite dans la direction de déplacement ou à l'avant du véhicule et qui contient une information sur l'intensité d'un faisceau radar réfléchi par l'objet et
association (660) du premier signal de capteur avec le deuxième signal de capteur et une information concernant la distance entre la première et la deuxième position de mesure de signal pour déterminer la direction du déplacement de l'objet qui doit être déplacé sur le véhicule,
**caractérisé en ce que**
dans l'étape d'association (660) a lieu en outre une estimation de l'extension de l'objet à déplacer sur le véhicule par recours à l'information concernant l'intensité et la vitesse provenant du premier signal de capteur et/ou par recours à l'information concernant l'intensité et la vitesse provenant du deuxième signal de capteur.

2. Procédé (600) selon la revendication 1, **caractérisé en ce que** dans l'étape d'association (660), l'extension de l'objet à déplacer sur le véhicule est estimée par recours à une ligne caractéristique d'une intensité de réflexion (220) par l'intermédiaire d'une vitesse radiale (230) en recourant à des valeurs de mesure d'un premier capteur (110) et en recourant à une caractéristique d'une intensité de réflexion (220) par l'intermédiaire d'une vitesse radiale (230) en recourant à des valeurs de mesure d'un deuxième capteur (120).

3. Procédé (600) selon l'une des revendications précédentes, **caractérisé en ce que** dans l'étape de réception (620), le premier signal de capteur qui contient une information concernant l'évolution temporelle et une modification du signal de capteur est reçu et/ou dans lequel, dans l'étape d'obtention (640), le deuxième signal de capteur qui contient une information sur l'évolution temporelle et une modification du signal de capteur est reçu, et dans l'étape d'association s'effectue en outre une estimation de la position de l'objet à déplacer sur le véhicule par recours à l'information déduite de l'évolution temporelle et de la modification du signal du premier signal de capteur et/ou en recourant à l'information déduite de l'évolution temporelle et de la modification du deuxième signal de capteur.

4. Procédé (600) selon l'une des revendications précédentes, **caractérisé en ce que** dans l'étape d'association (660), la position de l'objet par rapport au véhicule est définie sur la base d'une grandeur de différence, la différence entre une fréquence ou vitesse représentée par le premier signal de capteur et une fréquence ou vitesse représentée par le deuxième signal de capteur étant formée pour déterminer la grandeur de différence.

5. Procédé (600) selon la revendication 4, **caractérisé en ce que** dans l'étape d'association (660), la position de l'objet est détectée au milieu du véhicule si la grandeur de différence est située à l'intérieur d'une plage de tolérance autour d'une valeur nulle.

6. Procédé (600) selon l'une des revendications 4 ou 5, **caractérisé en ce qu'**à l'étape d'association (660), la position de l'objet dans la direction de déplacement sur le côté droit du véhicule est détectée si la grandeur de différence présente une valeur positive.

7. Procédé (600) selon l'une des revendications 4 à 6, **caractérisé en ce qu'**à l'étape d'association (660), la position de l'objet sur le côté gauche dans la direction de déplacement est détectée si la grandeur de différence présente une valeur négative.

8. Procédé (600) selon l'une des revendications précédentes, **caractérisé en ce que** le procédé (600) présente en outre une étape de réception d'un troisième signal de capteur qui représente une accélération d'au moins un composant du véhicule supérieure à une valeur de seuil d'accélération, le procédé (600) présentant en outre une étape d'activation d'un moyen (160, 170) de protection des passagers du véhicule si le troisième signal de capteur est reçu après qu'il a été défini que l'objet se déplace en direction du véhicule.

9. Appareil de commande (130) configuré pour mettre en oeuvre les étapes d'un procédé (600) selon l'une des revendications 1 à 8.

10. Produit de programme informatique doté de codes de programme et conservés sur un support lisible par machine, en vue de la mise en oeuvre du procédé (600) selon l'une des revendications 1 à 8 lorsque le programme est exécuté sur un appareil de commande (130) ou une installation de traitement de données.

11. Système (110, 120, 130) de capteurs qui comporte les caractéristiques suivantes :
un premier capteur radar (110) observant vers l'avant, monté sur le côté du véhicule (100) situé à gauche dans la direction de déplacement et configuré pour délivrer un premier signal de capteur qui représente une vitesse mesurée d'un objet (210) sur le véhicule,
un deuxième capteur radar (120) observant vers l'avant monté sur le côté du véhicule (100) situé à droite dans la direction de déplacement et configuré pour délivrer un deuxième signal qui représente une vitesse de l'objet sur le véhicule et
une unité de commande (130) selon la revendication 9.
